(19) Europäisches Patentamt / European Patent Office / Office européen des brevets

(11) **EP 2 702 559 B1**

(12) **EUROPÄISCHE PATENTSCHRIFT**

(45) Veröffentlichungstag und Bekanntmachung des Hinweises auf die Patenterteilung:
**08.08.2018 Patentblatt 2018/32**

(51) Int Cl.:
**G06T 7/44** *(2017.01)* **G06T 7/90** *(2017.01)*

(21) Anmeldenummer: **12716004.2**

(22) Anmeldetag: **20.04.2012**

(86) Internationale Anmeldenummer:
**PCT/EP2012/057304**

(87) Internationale Veröffentlichungsnummer:
**WO 2012/146545 (01.11.2012 Gazette 2012/44)**

(54) **VERFAHREN UND VORRICHTUNG ZUR STEUERUNG EINER SCHEINWERFERANLAGE EINES FAHRZEUGS**

METHOD AND DEVICE FOR STEERING THE HEAD LAMP SYSTEM OF A VEHICLE

PROCÉDÉ ET DISPOSITIF POUR CONTRÔLER LES FEUX DES PHARES D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2011 DE 102011017644**

(43) Veröffentlichungstag der Anmeldung:
**05.03.2014 Patentblatt 2014/10**

(73) Patentinhaber: **Robert Bosch GmbH**
**70442 Stuttgart (DE)**

(72) Erfinder:
• **EHLGEN, Tobias**
**88212 Ravensburg (DE)**
• **VAN STAA, Sebastian**
**71229 Leonberg (DE)**

(56) Entgegenhaltungen:
**US-A1- 2010 157 614 US-B1- 6 320 176**

EP 2 702 559 B1

**Beschreibung**

Stand der Technik

Die vorliegende Erfindung bezieht sich auf ein Verfahren zur Steuerung einer Scheinwerferanlage eines Fahrzeugs, auf eine entsprechende Vorrichtung sowie auf ein entsprechendes Computerprogrammprodukt gemäß den Hauptansprüchen.

Herkömmliche Fahrerassistenzsysteme bieten oftmals keine oder eine sehr unzureichende Erkennung von meteorologischen Phänomenen während einer Fahrt des Fahrzeugs, wie beispielsweise dem Auftreten von Nebel oder Rauch vor dem Fahrzeug. Insbesondere bei Nacht oder Dunkelheit, wenn bei der Fahrt des Fahrzeugs Scheinwerfer eingeschaltet sind, kann dies zu gefährlichen Fahrtsituationen führen, beispielsweise wenn bei der Einfahrt in einen Nebelbank die Beleuchtung zu hoch eingestellt ist und somit der Fahrer durch die starke Reflexion von Licht an Aerosoltropfen, die den Nebel bilden, geblendet wird.

Die Druckschrift US 6,320,176 B1 offenbart einen Fahrzeugregensensor, der einen Bildsensor verwendet.

Die Druckschrift US 2010/0157614 A1 offenbart ein Verfahren zur Umschaltung eines Scheinwerfer-Ausleuchtungsmodus eines Motorfahrzeugs.

Offenbarung der Erfindung

Vor diesem Hintergrund wird mit der vorliegenden Erfindung ein Verfahren zur Steuerung einer Scheinwerferanlage eines Fahrzeugs, weiterhin eine Vorrichtung, die dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Steuerung einer Scheinwerferanlage eines Fahrzeugs mit folgenden Schritten:

- Einlesen von Bildinformationen eines Bildes einer Kamera;
- Bereitstellen eines Farbindikatorwertes für zumindest einen Teilausschnitt des Bildes der Kamera, wobei der Farbindikatorwert ein Verhältnis zwischen einem ersten Parameter und einem zweiten Parameter repräsentiert, wobei der erste Parameter einen Wert repräsentiert, der unter Anwendung eines ersten Farbfilters auf die Bildinformationen in dem Teilausschnitt erhalten wird und der zweite Parameter einen Wert repräsentiert, der unter keiner Anwendung eines Farbfilters oder der Anwendung eines vom ersten Farbfilter unterschiedlichen zweiten Farbfilters auf die Bildinformationen in dem Teilausschnitt erhalten wird und wobei im Schritt des Bereitstellens ein Gradientenindikatorwert bereitgestellt wird, der einen aus den Bildinformationen entnehmbaren Helligkeitsunterschied von unterschiedlichen, insbesondere benachbarten Bildbereichen des Bildes der Kamera repräsentiert;
- Bestimmen eines Aerosolintensitätswertes unter Verwendung des Farbindikatorwertes, um eine Intensität des Aerosols in dem Sichtfeld der Kamera des Fahrzeugs als Aerosolsignal zu bestimmen und bereitzustellen, wobei die Intensität eines Aerosols eine Menge von Tropfen oder Partikeln repräsentiert, die im Sichtfeld der Kamera des Fahrzeugs vorhanden zu sein scheint und wobei im Schritt des Bestimmens der Aerosolintensitätswert unter Verwendung des Farbindikatorwertes und unter Verwendung des Gradientenindikatorwertes bestimmt wird;
- Einlesen des Aerosolsignals, das eine erkannte Intensität des Aerosols in einem Sichtfeld der Kamera des Fahrzeugs repräsentiert; und
- Ansteuern eines Veränderns einer Lichtausstrahlung in einem Beleuchtungsbereich vor dem Fahrzeug durch die Scheinwerferanlage, ansprechend auf das Aerosolsignal;

dadurch gekennzeichnet, dass
im Schritt des Bestimmens vor dem Bestimmen des Aerosolintensitätswertes der Farbindikatorwert in einem Bereich zwischen Farbindikatorgrenzwerten normiert wird und der Gradientenindikatorwert in einem Bereich zwischen Gradientenindikatorgrenzwerte normiert wird und dass
ferner ein Schritt des Erkennens des Vorhandenseins einer für den Straßenverkehr kritischen Intensität des Aerosols in dem Sichtfeld der Kamera des Fahrzeugs vorgesehen ist, wenn der Aerosolintensitätswert in einer vorbestimmten Beziehung zu einem Schwellwert steht.

Die vorliegende Erfindung schafft ferner eine Vorrichtung zur Steuerung einer Scheinwerferanlage eines Fahrzeugs, wobei die Vorrichtung die folgenden Merkmale aufweist:

- eine Schnittstelle zum Einlesen von Bildinformationen eines Bildes einer Kamera;
- eine Einheit zum Bereitstellen eines Farbindikatorwertes für zumindest einen Teilausschnitt des Bildes der Kamera, wobei der Farbindikatorwert ein Verhältnis zwischen einem ersten Parameter und einem zweiten Parameter repräsentiert, wobei der erste Parameter einen Wert repräsentiert, der unter Anwendung eines ersten Farbfilters auf die Bildinformationen in dem Teilausschnitt erhalten wird und der zweite Parameter einen Wert repräsentiert, der unter keiner Anwendung eines Farbfilters oder der Anwendung eines vom ersten Farbfilter unterschiedlichen zweiten Farbfilters auf die Bildinformationen in dem Teilausschnitt erhalten wird und wobei in der Einheit zum Bereitstellen ein Gradientenindikatorwert bereitgestellt wird, der einen aus den Bildinformationen entnehmbaren Helligkeitsunterschied von unterschiedlichen, insbesondere benachbarten Bildbereichen des Bildes der Kamera repräsentiert;

- eine Einheit zum Bestimmen eines Aerosolintensitätswertes unter Verwendung des Farbindikatorwertes, um eine Intensität des Aerosols in dem Sichtfeld der Kamera des Fahrzeugs als Aerosolsignal zu bestimmen und bereitzustellen, wobei die Intensität eines Aerosols eine Menge von Tropfen oder Partikeln repräsentiert, die im Sichtfeld der Kamera des Fahrzeugs vorhanden zu sein scheint und wobei in der Einheit zum Bestimmen der Aerosolintensitätswert unter Verwendung des Farbindikatorwertes und unter Verwendung des Gradientenindikatorwertes bestimmt wird;

- eine Schnittstelle zum Einlesen des Aerosolsignals, das die erkannte Intensität eines Aerosols in einem Sichtfeld der Kamera des Fahrzeugs repräsentiert; und

- eine Einheit zum Ansteuern eines Veränderns einer Lichtausstrahlung in einem Beleuchtungsbereich vor dem Fahrzeug durch die Scheinwerferanlage, ansprechend auf das Aerosolsignal

dadurch gekennzeichnet, dass
in der Einheit zum Bestimmen vor dem Bestimmen des Aerosolintensitätswertes der Farbindikatorwert in einem Bereich zwischen Farbindikatorgrenzwerten normiert wird und der Gradientenindikatorwert in einem Bereich zwischen Gradientenindikatorgrenzwerte normiert wird und dass
ferner eine Einheit zum Erkennens des Vorhandenseins einer für den Straßenverkehr kritischen Intensität des Aerosols in dem Sichtfeld der Kamera des Fahrzeugs vorgesehen ist, wenn der Aerosolintensitätswert in einer vorbestimmten Beziehung zu einem Schwellwert steht.

Die vorliegende Erfindung schafft somit eine Vorrichtung, die ausgebildet ist, um die Schritte des erfindungsgemäßen Verfahrens in entsprechenden Einrichtungen durchzuführen bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Unter einer Kamera kann dabei eine optische Erfassungseinrichtung zur visuellen Erfassung der Fahrzeugumgebung in einem Sichtbereich der Kamera verstanden werden. Unter einem Aerosol kann beispielsweise ein Gemisch aus flüssigen oder festen Teilchen in einem Gas verstanden werden, wie beispielsweise Nebel, Dampf oder Rauch, der in der Luft im Sichtfeld der Kamera des Fahrzeugs auftaucht. Unter einer Intensität eines Aerosols kann beispielsweise eine Menge von Tropfen oder Partikeln verstanden werden, die im Sichtfeld der Kamera des Fahrzeugs vorhanden zu sein scheint. Unter einem Verändern kann dabei nicht bloß die Lichtausstrahlung selbst sondern auch eine Veränderung von Parametern zur Steuerung der Lichtausstrahlung wie beispielsweise eine Veränderung der Umschaltzeit zwischen Fernlicht und Abblendlicht oder eine Veränderung der Richtung einer Lichtausstrahlung bei einem System einer gleitenden Leuchtweiteregulierung verstanden werden. Das Verändern der Lichtausstrahlung bezieht sich somit auf eine allgemeine Veränderung oder Parametrierung bei der Steuerung der Beleuchtung des Fahrzeugs durch die Scheinwerferanlage.

Die vorliegende Erfindung basiert auf der Erkenntnis, dass eine besonders gute Unterstützung eines Fahrers und dadurch erreicht werden kann, dass automatisch eine Ansteuerung der Lichtausstrahlung in Abhängigkeit von einem erkannten Aerosol in einem Sichtbereich einer Kamera des Fahrzeugs möglich wird. Auf diese Weise kann ein Fahrer des Fahrzeugs von einer manuellen Umschaltung der Lichtausstrahlung entlastet werden, insbesondere wenn erkannt wird, dass eine Dichte des Aerosols eine vorbestimmte Schwelle überschritten hat, so dass die Gefahr einer Blendung des Fahrers bei einer falsch eingestellten Lichtausstrahlung gegeben ist.

Die vorliegende Erfindung bietet den Vorteil einer unmittelbaren Unterstützung des Fahrers bei Auftreten von Aerosol im Sichtfeld der Kamera des Fahrzeugs, in dem beispielsweise sofort die Richtung des vom Scheinwerfer ausgestrahlten Lichts weiter in Richtung der Fahrbahn abgesenkt wird, um eine Blendung des Fahrers zu vermeiden. Wenn der Fahrer weiß, dass ab einer bestimmten Intensität des Aerosols in der Luft vor dem Fahrzeug automatisch das Fahrerassistenzsystem eingreift und die Lichtausstrahlung entsprechend anpasst kann auch bei geringen Intensität und des Aerosols im Sichtbereich der Kamera des Fahrzeugs noch mit einer optimalen Beleuchtung des Fahrzeugs gefahren werden.

Gemäß einer weiteren Ausführungsform der vorliegenden Erfindung kann im Schritt des Ansteuerns eine Veränderung eines Lichtausstrahlungsparameters abhängig von der Zeit des Vorhandenseins des Aerosols, insbesondere des Vorhandenseins einer vorbestimmten Intensität des Aerosols bestimmt werden. Unter einem Lichtausstrahlungsparameter kann beispielsweise eine Entprellzeit (d.h. eine Zeit bis zum Beginn einer Erhöhung der Leuchtweite), eine Geschwindigkeit oder einem Verlauf, mit der die Leuchtweite erhöht wird, eine Leuchthöhe, bis zu der die Scheinwerfer maximal Licht ausstrahlen oder ein ähnlicher Parameter verstanden werden, der von oder in einem Beleuchtungssystem des Fahrzeugs einstellbar ist. Eine derartige Ausführungsform der vorliegenden Erfindung bietet den Vorteil, dass eine sehr flexible Vorrichtung zur Regulierung der Leuchtweite in Abhängigkeit von einer Zeit möglich ist während der eine bestimmte Intensität eines Aerosols vorhanden ist. Beispielsweise kann bei einer Durchfahrt einer nebeligen Strecke erkannt werden, dass eine hohe Dichte von Nebel oder eine lange Fahrtstrecke im Nebel mit einer bestimmten Mindestdichte zurückzulegen ist, so dass eine hohe Wahrscheinlichkeit besteht, dass nach einem erkannten Unterschreiten einer Intensität des Nebels nach kurzer Zeit später nochmals eine Nebelbank durchfahren wird. In dieser Situation kann es sehr hilfreich sein, wenn von einer Veränderung der Lichtausstrahlung durch die Beleuchtungseinrichtung zunächst eine längere Zeitspanne (d.h. eine längere Entprellzeit) abgewartet wird, ob tatsächlich noch eine Nebelbank mit der hohen Intensität durchfahren wird, so dass dies wieder zu einem Abblenden oder einem weiteren Verändern der Lichtaussendung auf den vorangegangen Ausleuchtungszustand führen würde.

Günstig ist es ferner, wenn gemäß einer weiteren Ausführungsform der vorliegenden Erfindung im Schritt des Ansteuerns eine Veränderung der Lichtverteilung bei einer aktivierten Lichtausstrahlungskontrolle in Abhängigkeit von der erkannten Intensität des Aerosols angesteuert wird. Eine derartige Ausführungsform der vorliegenden Erfindung ermöglicht eine sehr flexible Vorrichtung oder ein sehr flexibles Verfahren zur Regulierung der Leuchtweite in Abhängigkeit von einer Intensität, des Aerosols wie beispielsweise Nebel. Hierdurch kann beispielsweise in Abhängigkeit von der tatsächlich erkannten Intensität des Aerosols die Leuchtweite eingestellt werden.

Gemäß einer weiteren Ausführungsform der vorliegenden Erfindung kann im Schritt des Ansteuerns eine Veränderung eines Lichtausstrahlungsparameters für eine Lichtausgabe durch die Scheinwerferanlage des Fahrzeugs zwischen unterschiedlichen Beleuchtungszuständen angesteuert werden. Eine derartige Ausführungsform der vorliegenden Erfindung bietet den Vorteil, dass beispielsweise das einem Umschalten der Scheinwerferanlage in unterschiedliche Beleuchtungszustände (beispielsweise Abblend- oder Fernlicht) sehr einfach möglich ist. Kann beispielsweise aus vordefinierten Beleuchtungszuständen derjenige Beleuchtungszustand ausgewählt werden, der für die jeweilige Situation gerade passend ist. Ferner bietet eine derartige Ausführungsform der vorliegenden Erfindung den Vorteil, dass beispielsweise bei der Fahrt durch Nebel beim Auftreten von wiederholten Nebelschwaden nicht zu schnell wieder von Abblendlicht auf Fernlicht umgeschaltet wird, so dass der Fahrer durch das Unterbleiben eines solchen schnellen Wechsels dann nicht irritiert wird. Die vorliegende Erfindung umfasst die folgenden Schritte:

- Einlesen von Bildinformationen eines Bildes der Kamera;
- Bereitstellen eines Farbindikatorwertes für zumindest einen Teilausschnitt des Bildes der Kamera, wobei der Farbindikatorwert ein Verhältnis zwischen einem ersten Parameter und einem zweiten Parameter repräsentiert, wobei der erste Parameter einen Wert repräsentiert, der unter Anwendung eines ersten Farbfilters auf die Bildinformationen in dem Teilausschnitt erhalten wird und der zweite Parameter einen Wert repräsentiert, der unter keiner Anwendung eines Farbfilters oder der Anwendung eines vom ersten Farbfilters unterschiedlichen zweiten Farbfilters auf die Bildinformationen in dem Teilausschnitt erhalten wird, und/oder
  Bereitstellen eines Gradientenindikatorwert , der einen aus den Bildinformationen entnehmbaren Helligkeitsunterschied von unterschiedlichen, insbesondere benachbarten Bildbereich des Bildes der Kamera repräsentiert; und
- Bestimmen eines Aerosolintensitätswertes unter Verwendung des Farbindikatorwertes und/oder unter Verwendung des Gradientenindikatorwertes, um die Intensität des Aerosols in dem Sichtfeld der Kamera des Fahrzeugs als Aerosolsignal zu bestimmen und bereitzustellen.

Unter einer Bildinformation kann ein Datensatz verstanden werden, der das von der Kamera aufgenommene Bild repräsentiert, beispielsweise in der Form von Farb- oder Helligkeitsinformationen einzelner Pixel des Kamerabildes. Unter einem Teilausschnitt des Bildes der Kamera kann ein Bereich des Kamerabildes verstanden werden, der entweder das ganze Kamerabild oder lediglich einen Teil des Kamerabildes umfasst. Und einem Verhältnis kann allgemein eine mathematische Beziehung zwischen Parametern verstanden werden, wie beispielsweise die Bildung eines Vergleichs, die Bildung eines Quotienten, die Bildung einer Differenz oder Ähnliches, wobei es unerheblich ist, welcher der Parameter beispielsweise im Zähler beziehungsweise Nenner bei der Bildung eines Quotienten oder welcher Parameter als Minuend oder als Subtrahend bei der Bildung einer Differenz verwendet wird. Unter einem Wert, der unter Anwendung eines Farbfilters auf die Bildinformationen in den Teilausschnitt erhalten wird kann ein Wert verstanden werden, der eine Farbinformation repräsentiert, die in den Teilausschnitt des Bildes der Kamera auftritt, wobei jedoch eine spektralen Komponente durch das Farbfilter herausgefiltert bzw. unterdrückt wurde. Somit gibt der Wert, der unter Anwendung eines Farbfilters erhalten wird nicht die tatsächliche Farbinformation wieder, wie sie die Kamera in den betreffenden Teilausschnitt des Bildes sieht. Der Gradientenindikatorwert, der auch als mittlerer Gradient in einem Bereich des Bildes bezeichnet werden kann, ist beispielsweise der Mittelwert der Änderungen der Helligkeit von einem Pixel zum nächsten. Dabei läge bei einem gleichförmigen Bild mit wenig Struktur (d.h. bei geringen Unterschieden zwischen benachbarten Pixeln) ein geringer Gradientenindikatorwert oder mittlerer Gradient vor, was auf Nebel hindeutet. Unter einem Aerosolintensitätswert kann ein Parameter verstanden werden, der die aufgetretene Intensität des Aerosols repräsentiert. Ferner ist es auch denkbar, dass der Wert, der unter Anwendung eines Farbfilters auf die Bildinformationen in den Teilausschnitt erhalten wird, durch eine Mittelung von mehreren einzelnen solcher Werte erhalten wird.

Eine derartige Ausführungsform der vorliegende Erfindung basiert auf der Erkenntnis, dass durch den Vergleich von zumindest zwei Werten aus den Teilausschnitt des Bildes der Kamera, bei denen zumindest ein Wert unter Verwendung eines Farbfilters bestimmt wurde, eine zuverlässige Erkennung der Intensität des Aerosols möglich ist. Dabei kann ein Aerosolintensitätswert (insbesondere als skalare Größe) erhalten werden, der eine einfache Bestimmung des aufgetretenen Aerosols in dem Sichtbereich vor dem Fahrzeug beispielsweise durch einen Schwellwertvergleich ermöglicht. Insbesondere wird bei einer solchen Bestimmung der Intensität des Aerosols ausgenutzt, dass bestimmte spektrale Anteile von Licht an einem Aerosoltropfen oder-partikel unterschiedlich stark reflektiert oder absorbiert werden. Durch den Vergleich oder die Verhältnisbildung von zwei Werten, die sich auf den gleichen Teilausschnitt des Bildes der Kamera beziehen, jedoch unterschiedliche spektralen Anteile enthalten, lässt sich somit erkennen, welcher spektrale Anteile von Licht an dem Aerosol bzw. einem Aerosoltropfen reflektiert werden. Nach dem jeder Aerosoltropfen nur einen kleinen Anteil an dem insgesamt zur Kamera reflektierten Licht bewirkt, kann durch die Auswertung der entsprechenden Parameter im jeweiligen Teilausschnitt ein Rückschluss gezogen werden, wie viel Aerosol bzw. wie viele Aerosoltropfen oder -partikel im Sichtfeld der Kamera des Fahrzeugs vorhanden sind. Alternativ oder zusätzlich basiert diese Ausführungsform der vorliegenden Erfindung auf der Erkenntnis, dass die Bestimmung der Intensität des Aerosols vorteilhafterweise auch auf einem optischen Merkmal aus den Bildinformationen basiert, die auf einem (Helligkeits-) Gradient beziehungsweise ein Unterschied von (Helligkeitsgradienten) Gradienten in unterschiedlichen Bildbereichen des Bildes der Kamera basiert. Die 'Intensität' des Aerosols kann dabei beispielsweise aus einer Verknüpfung eines Wertes, der die "Rotunterdrückung" bezeichnet, und dem mittlerem Gradienten berechnet werden. Dabei brauchen sich die für die Auswertung der Helligkeit bzw. des Gradienten verwendeten Bildbereiche nicht zwingenderweise im gleichen Teilausschnitt befinden, aus der auch die Parameter für den Farbintensitätswert entnommen werden. Durch einen solchen Ansatz lässt sich folglich die Intensität des Aerosols recht zuverlässig und lediglich durch die Verwendung von einfachen technischen Hilfsmitteln wie einer optischen Kamera bestimmen. Auf das Vorsehen von weiteren Sensoren zur Bestimmung des Aerosols kann folglich verzichtet werden, was die Herstellungskosten des Fahrzeugs senkt. Günstig ist es ferner, wenn gemäß einer Ausführungsform der vorliegenden Erfindung im Schritt des Bestimmens der Aerosolintensitätswert durch eine Linearkombination, insbesondere durch eine gewichtete Linearkombination aus dem Farbindikatorwert und dem Gradientenindikatorwert bestimmt wird. Eine derartige Ausführungsform der vorliegenden Erfindung bietet eine schaltungstechnisch oder numerisch einfach durchzuführenden mathematischen Operation zur Bestimmung der Intensität des Aerosols, wobei auch insbesondere bei einer gewichteten Linearkombination noch eine zusätzliche Flexibilität besteht, wie stark die beiden verwendeten Intensitätswerte in die Bestimmung des Aerosolintensitätswerts einfließen sollen.

Ferner wird im Schritt des Bestimmens vor dem Bestimmen des Aerosolintensitätswertes der Farbindikatorwert in einem Bereich zwischen Farbindikatorgrenzwerten normiert und/oder der Gradientenindikatorwert in einem Bereich zwischen Gradientenindikatorgrenzwerte normiert. Um eine einfache Bestimmung der Stärke in bzw. Intensität des Aerosols durchzuführen, ist es günstig einen oder beide Werte, die bei der Bestimmung des Aerosolintensitätswertes verwendet werden, zu nominieren. Auf diese Weise kann eine aufwändige Umrechnung zur Verknüpfung von ansonsten unterschiedlichen Werten mit unterschiedlichen physikalischen Einheiten entfallen. Die Farbindikatorgrenzwerte und/oder Gradientenindikatorgrenzwerte können dabei beispielsweise als von der Kamera maximal erfassbare Werte vorbekannt sein. Beispielsweise können diese Grenzwerte in einer Laborumgebung festgestellt werden.

Gemäß einer vorteilhaften Ausführungsform der vorliegenden Erfindung kann im Schritt des Bereitstellens ein Farbindikatorwert bereitgestellt werden, bei dem das erste oder zweite Farbfilter ein Farbfilter ist, welches Rot-Anteile in den Bildinformationen herausfiltert. Eine derartige Ausführungsform der vorliegenden Erfindung bietet den Vorteil, dass insbesondere die Auswertung auf der Basis von reflektierten Rot-Anteilen sehr günstig ist, da die Reflexion von Rot-Anteilen in einem Aerosol wie beispielsweise Nebel stark mit der Intensität des Aerosols variiert.

Günstig ist es ferner, wenn gemäß einer weiteren Ausführungsform der vorliegenden Erfindung im Schritt des Bestimmens ein Aerosolindikatorwert bestimmt wird, der durch einen Skalar repräsentiert ist. Eine derartige Ausführungsform der vorliegenden Erfindung bietet den Vorteil, dass durch eine technisch einfach zweiter zu verarbeitende skalare Größe die Intensität des Aerosols, insbesondere des Nebels spezifiziert oder angegeben werden kann. Ferner ist auch eine leichte Parametrisierbarkeit/Applizierbarkeit bei einer von einem Fahrerassistenzsystem durchführbaren technischen Reaktion auf Nebel möglich, da beispielsweise nur ein einziger Skalar mit einem Schwellwert vergleichen werden braucht und mehrere Werte/Vergleiche zu berücksichtigen bzw. durchzuführen sind.

Gemäß einer weiteren Ausführungsform der vorliegenden Erfindung kann im Schritt des Bestimmens der Gradientenindikatorwert unter Verwendung von Bildinformationen aus einem mittigen Bereich des Bildes des Kamera bestimmt werden, insbesondere wobei der Gradientenindikatorwert unter Verwendung von Bildinformationen bestimmt wird, die einem Bildsegment des Bildes entstammen, der bei einer Einteilung des Bildes der Kamera in neun sich nicht überlappende Bildsegmente von acht dieser Bildsegmente umgeben ist. Eine derartige Ausführungsform der vorliegenden Erfindung bietet den Vorteil, dass insbesondere im mittigen Bereich des Bildes der Kamera ein Helligkeitsunterschied beziehungsweise ein Helligkeitsgradient wesentlich stärker ausgeprägt ist, als in einem Randbereich des Bildes. Die Unterdrückung des Rot-Anteils ist in der Mitte des Bildes (d.h. im Scheinwerferkegel) beispielsweise besonders stark ausgeprägt; auf das Gradientenbild gibt es keinen Einfluss. Insbesondere die Randbereiche des Bildes werden meist bei einer Fahrt mit eingeschalteten Scheinwerfern nicht stark ausgeleuchtet, so dass für die Erkennung auch von geringen Helligkeitsunterschieden beim Auftreten des Aerosols möglichst ein Bereich des Kamerabildes verwendet werden sollte, bei dem durch eine starke Ausleuchtung kleinere Unterschiede dennoch einfach erkennbar sind.

Gemäß der vorliegenden Erfindung ist ferner ein Schritt des Erkennens des Vorhandenseins einer für den Straßenverkehr kritischen Intensität des Aerosols in dem Sichtfeld der Kamera des Fahrzeugs vorgesehen, wenn der Aerosolintensitätswert in einer vorbestimmten Beziehung zu einem Schwellwert steht, beispielsweise wenn der Aerosolintensitätswert größer als der Schwellwert ist. Eine derartige Ausführungsform der vorliegen Erfindung bietet den Vorteil einer technisch sehr einfach ausführbaren Überprüfung, ob eine für die Fahrt des Fahrzeugs kritische Intensität des Aerosols erreicht ist. Beispielsweise kann eine kritische Intensität des Aerosols auf dann erreicht sein, wenn die Sicht vor dem Fahrzeug kleiner als ein vorbestimmter Grenzwert ist. Bei einer Erkennung einer solchen für den Straßenverkehr oder die Fahrt des Fahrzeugs kritisch Intensität des Aerosols, kann beispielsweise eine Warnung an den Fahrer des Fahrzeugs ausgegeben werden.

Die Erfindung wird nachstehend anhand der beigefügten Zeichnungen beispielhaft näher erläutert. Es zeigen:

Fig. 1      ein Blockschaltbild eines Fahrzeugs, in dem ein Ausführungsbeispiel der vorliegenden Erfindung eingesetzt wird;

Fig. 2      ein Blockschaltbild einer Vorrichtung zur Erkennung einer Intensität eines Aerosols in einem Sichtfeld einer Kamera eines Fahrzeugs gemäß einem Ausführungsbeispiel der vorliegenden Erfindung zur Ablaufdiagramm eines Ausführungsbeispiels der vorliegenden Erfindung;

Fig. 3      ein Ablaufdiagramm eines Ausführungsbeispiels der vorliegenden Erfindung als Verfahren; und

Fig. 4      ein Ablaufdiagramm eines weiteren Ausführungsbeispiels der vorliegenden Erfindung als Verfahren.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

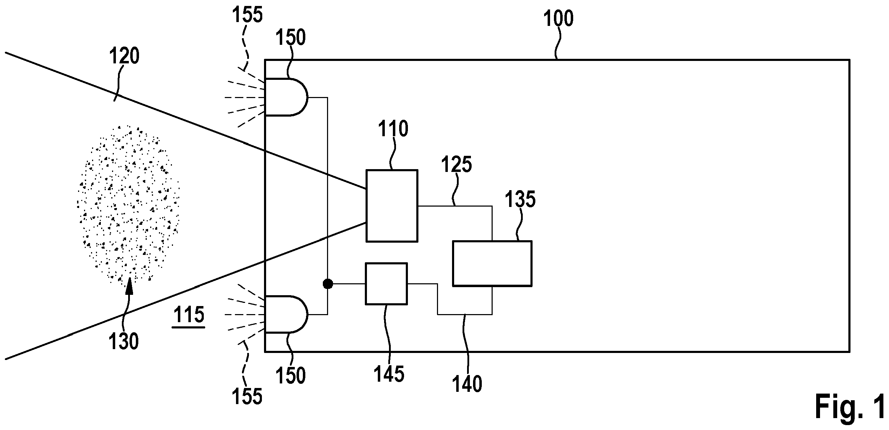

Fig. 1 zeigt ein Blockschaltbild eines Fahrzeugs 100, dass ein Ausführungsbeispiel der vorliegenden Erfindungen enthält. Das Fahrzeug 100 weist eine Kamera 110 auf, um eine Fahrzeugumgebung 115 in einem Sichtbereich 120 der Kamera 110 zu erfassen und ein entsprechendes Kamerabild 125 bereitzustellen. Das Sichtfeld 120 kann insbesondere ein Bereich vor dem Fahrzeug 100 sein. In den Sichtbereich 120 ist ein Aerosol 130 enthalten, dessen Intensität erkannt werden soll. Das Kamerabild 125 wird einer Vorrichtung 135 zugeführt, welche zu Erkennung der Intensität des Aerosols in dem Sichtfeld der Kamera des Fahrzeugs ausgebildet ist. Die genaue Funktion der Vorrichtung 135 wird nachfolgend noch näher erläutert. Wird nun beispielsweise erkannt, dass die Intensität des Aerosols 130 größer als ein vorbestimmter Schwellwert ist, wird ein Aerosolsignal 140 generiert und an eine Scheinwerfersteueranlage 145 ausgegeben. Ansprechend auf das Aerosolsignal 140 erfolgt ein Ändern der Ansteuerung der Lichtausstrahlung durch die Scheinwerfersteueranlage 145, beispielsweise derart, dass die Scheinwerfer 150 des Fahrzeugs so angesteuert werden, dass ein von den Scheinwerfern 150 ausgesandtes Licht 155 in einem steileren Winkel zur Fahrbahn, auf der das Fahrzeug 100 fährt, gerichtet wird. Auf diese Weise kann verhindert werden, dass das von den Scheinwerfern 150 ausgesandtes Licht 155 an dem meist in unmittelbarer Nähe des Fahrzeugs 100 befindlichen Aerosol 130 reflektiert wird und den Fahrer blendet. Die Scheinwerfersteueranlage 145 kann dabei auch in der Form einer Anlage zur gleitenden Leuchtweitenregulierung darstellen. Dabei kann eine Verschwenkung der Scheinwerfer zur Auslenkung des Lichtstrahls durchgeführt werden. Moderne Steueranlagen weisen aber auch eine Vielzahl von bewegbaren Spiegelelementen zur Reflexion eines Lichtstrahls in eine veränderbare gewünschte Richtung oder umfassten eine Anordnung von kleinen beweglichen Einzellichtquelle, durch deren Verstellung (d.h. Bewegung) eine Ausleuchtung des Bereichs vor dem Fahrzeug nahezu beliebig ausgestaltet werden kann. Auch solche modernen Systeme zur gleitenden Leuchtweitenregulierung können unter der Scheinwerfersteuerungsanlage 145 verstanden werden, wobei in diesem Fall nicht nur ein Umschalten der Lichtaussendung in Stufen (wie beispielsweise Fern- und Abblendlicht), sondern nahezu stufenlos innerhalb eines vorbestimmten Beleuchtungsbereichs verändert werden kann.

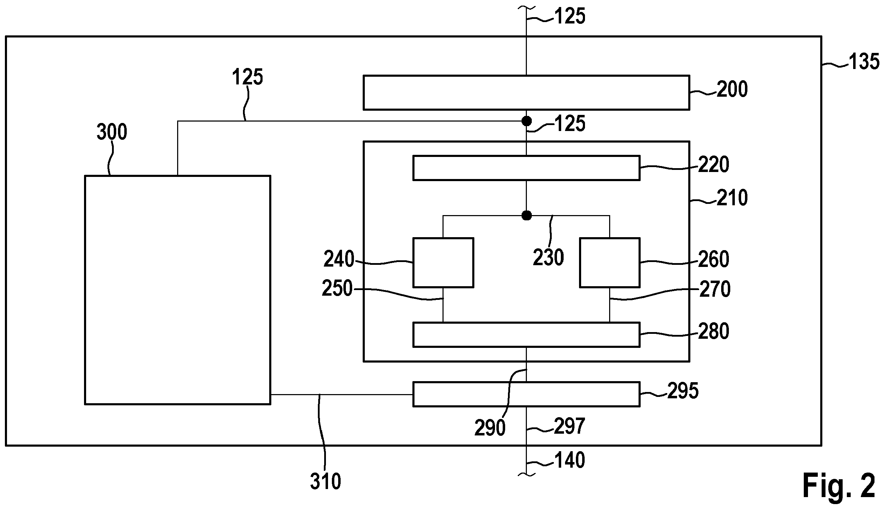

Fig. 2 zeigt ein Blockschaltbild der den Fig. 1 schematisch dargestellten Vorrichtung 135 zur Erkennung einer Intensität eines Aerosols in einem Sichtfeld einer Kammer des Fahrzeugs. Die Vorrichtung 135 umfasst eine Schnittstelle 200 zum Einlesen der ein Bildinformationen des Bildes 125 der Kamera 110. Diese Bildinformationen werden in beispielsweise in Form einer digitalen Datei einlesen, die das von der Kamera 110 aufgenommene Bilder repräsentiert. Dabei kann aus Gründen der Einfachheit direkt das von der Kamera 110 bereitgestellte Bild eingelesen werden, ohne dass zuvor bereits unterschiedliche Schritte einer Bildbearbeitung durchgeführt wurden. Weiterhin umfasst die Vorrichtung 135 eine Einheit 210 zum Bereitstellen eines Farbindikatorwertes. Diese Einheit 210 umfasst eine Einheit 220, in der ein Teilausschnitt 230 des Bildes 125, welches von der Schnittstelle 200 empfangenen wurde, extrahiert wird. Unter einem Teilausschnitt 230 des Bildes 125 kann dabei ein räumlich kleinerer Bereich des Bildes der Kamera 110 verstanden werden, der aber dennoch alle Informationen des Bildes 125 in diesen kleineren räumlichen Teilbereich des Bildes 125 umfasst. Ein solcher Teilausschnitt 230 enthält insbesondere eine Region des Kamerabildes 125, die für die Fahrt des Fahrzeugs von besonderem Interesse ist. Beispielsweise kann bei einer Fahrt durch eine Linkskurve der Teilausschnitt 230 aus einem linken Bereich des Kamerabildes 125 extrahiert werden, da dieser Bereich für die sichere Fahrt des Fahrzeugs wesentlich wichtigere Informationen hält, als beispielsweise die Bildinformationen im rechten Bereich des Kamerabildes 125. Der ausgewählte Teilausschnitt 230 wird nachfolgend einer Einheit 240 zum Ermitteln eines ersten Parameters 250 und einer Einheit 260 zum Ermitteln eines zweiten Parameters 270 zugeführt. In der Einheit 240 zum Ermitteln des ersten Parameters 250 wird der Teilausschnitt 230 des Bildes 125 der Kamera einer ersten Farbfilterung unterworfen, in der beispielsweise in dem Teilausschnitt 230 enthaltene Rot-Anteile unterdrückt, das heißt herausgefiltert oder stark gedämpft werden. Der erste Parameter 250 repräsentiert somit einen Teilausschnitt 230 des Bildes 125, bei dem die Bildinformation in Bezug auf den roten spektralen Anteil des Bildes nicht mit der von der Kamera 110 aufgenommenen Bildinformation in diesem Teilausschnitt 230 übereinstimmt. In der Einheit 260 zum Ermitteln des zweiten Parameters 270 kann der Teilausschnitt 230 des Bildes 125 einer zweiten Farbfilterung wie beispielsweise einer Filterung von blauen spektralen Komponenten unterworfen werden, um den zweiten Parameter 270 zu erhalten. Auch kann in der Einheit 260 zu Ermittlung des zweiten Parameters 270 eine spektrale Filterung unterbleiben, so dass der Parameter 270 den Bildinformationen des Teilausschnitts 230 entspricht.

Der erste Parameter 250 wurde der zweite Parameter 270 werden in einer Einheit 280 in ein Verhältnis zueinander gesetzt, um den Farbindikatorwert 290 zu bestimmen. Dabei wird beispielsweise ein Quotient aus dem ersten Parameter 250 und dem zweiten Parameter 270 gebildet, um den Farbindikatorwert 290 zu erhalten. Dieser Farbindikatorwert 290 wird beispielsweise in einer Einheit 295 verwendet, um den Aerosolintensitätswert 297 zu bestimmen, der die Intensität des Aerosols 130 einem Sichtfeld 120 der Kamera 110 des Fahrzeugs 100 repräsentiert. Dieser Aerosolintensitätswert 297 wird dann beispielsweise als Aerosolsignal 140 an die Scheinwerfersteuerungsanlage 145 übertragen.

Durch die Auswertung der Reflexionseigenschaften von Objekten im Sichtfeld 120 der Kamera 110 vor dem Fahrzeug in Bezug auf unterschiedliche spektralen Anteile lässt sich sehr gut erkennen, ob eine Aerosol 130 im Sichtfeld 120 aufgetreten ist und in welcher Intensität dieses Aerosol 130 im Sichtfeld 120 der Kamera 120 vorliegt. Die Verwendung des Bildes der Kamera 110 ermöglicht somit, dass weitere Sensoren speziell zu Erkennung eines vor dem Fahrzeug 100 auftretenden Aerosols 130 vermieden werden können, was einerseits die Systemkomplexität des Fahrzeugs 100 reduziert und zugleich weitere Kosten bei der Herstellung des Fahrzeugs 100 vermeidet.

Weiterhin umfasst die Vorrichtung 135 beispielsweise optionale Einheit 300, die einen Gradientenindikatorwert 310 bereitstellt. Diese Einheit 300 kann eine Helligkeit oder einen Gradienten (in Bezug auf die Helligkeit) von zwei unterschiedlichen Bildbereichen, beispielsweise zwei unterschiedlichen, insbesondere benachbarten Pixeln des Bildes 125 der Kamera 110, vergleichen oder miteinander in Beziehung setzen und hierdurch den Gradientenindikatorwert 310 generieren und bereitstellen. Der Gradientenindikatorwert 310 kann beispielsweise einem Gradient entsprechen, der den Unterschied der Helligkeit der beiden unterschiedlichen Bildbereiche repräsentiert. Der Gradientenindikatorwert 310 wird dann ferner durch die Einheit 295 zum diese Ausschreibung des Aerosolintensitätswertes 297 verwendet. Bei der Auswahl der Bildbereiche, die zur Bestimmung des Gradientenindikatorwertes 310 verwendet werden ist es besonders günstig, wenn eine mittiger Bereich des Bildes der Kamera verwendet wird, da in diesem Bereich die maximale Lichtstärke des von den beiden Scheinwerfern 150 ausgegebenen Lichts 155 erwarten ist. Bei einer maximalen Lichtsterne kann auch ein Helligkeitsunterschied einer größtmöglichen Präzision bestimmt werden. Insbesondere kann dabei bei einer Einteilung des Kamerabildes 125 in neun gleich große nicht-überlappende Bildsegmente das mittlere Bildsegment, das heißt dasjenige Bildsegment, das von acht dieser Bildsegmente umgeben ist, zur Bestimmung des Gradientenindikatorwerts 310 herangezogen werden. Um ferner Fehler bei der Bestimmung des Gradientenindikatorwertes zu vermeiden, kann auch eine Mittelung der Helligkeitsunterschiede der einzelnen Bildbereiche im betrachteten Bildsegment durchgeführt werden.

Durch die Verwendung des Gradientenindikatorwerts, der unterschiedliche Helligkeiten in unterschiedlichen Bildbereichen repräsentiert, lässt sich ferner durch die Berücksichtigung eines zweiten, von spektralen Rückstreueigenschaften der Aerosoltropfen unabhängigen physikalischen Parameters die Erkennung der Intensität des Aerosols weiter verbessern.

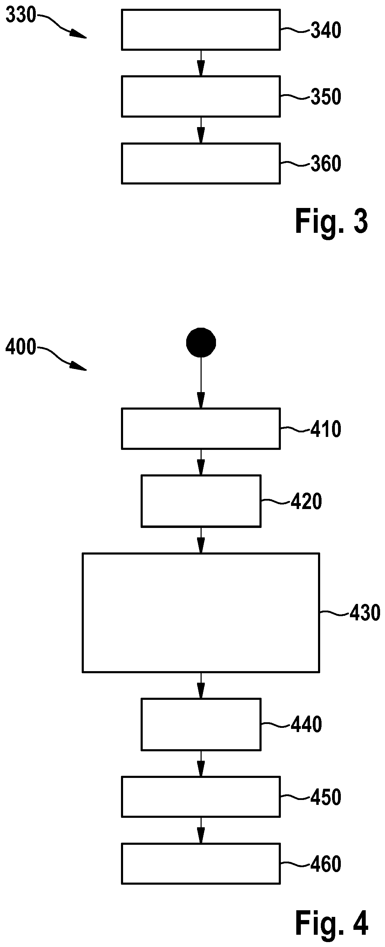

Fig. 3 zeigt ein Ablaufdiagramm eines Ausführrungsbeispiels der vorliegenden Erfindung als Verfahren 330 zur Erkennung einer Intensität eines Aerosols in einem Sichtfeld einer Kamera eines Fahrzeugs. Das Verfahren umfasst einen Schritt des Einlesens 340 von Bildinformationen eines Bildes der Kamera. Ferner umfasst das Verfahren 330 einen Schritt des Bereitstellens 350 eines Farbindikatorwertes für zumindest einen Teilausschnitt des Bildes der Kamera, wobei der Farbindikatorwert ein Verhältnis zwischen einem ersten Parameter und einem zweiten Parameter repräsentiert, wobei der erste Parameter einen Wert repräsentiert, der unter Anwendung eines ersten Farbfilters auf die Bildinformationen in dem Teilausschnitt erhalten wird und der zweite Parameter einen Wert repräsentiert, der unter keiner Anwendung eines Farbfilters oder der Anwendung eines vom ersten Farbfilter unterschiedlichen zweiten Farbfilters auf die Bildinformationen in dem Teilausschnitt erhalten wird, und/oder Bereitstellen eines Gradientenindikatorwertes, der einen aus den Bildinformationen entnehmbaren Helligkeitsunterschied von unterschiedlichen, insbesondere benachbarten Bildbereich des Bildes der Kamera repräsentiert. Schließlich umfasst das Verfahren 330 einen Schritt des Bestimmens 360 eines Aerosolintensitätswertes unter Verwendung des Farbindikatorwertes und/oder unter Verwendung des Gradientenindikatorwertes, um die Intensität des Aerosols in dem Sichtfeld der Kamera des Fahrzeugs als Aerosolsignal zu bestimmen und bereitzustellen.

Insbesondere kann die vorliegende Erfindung zur Messung von Nebelintensität bei kamerabasierter Lichtsteuerung verwendet werden. Zusätzliche Sensoren zur Erkennung von Nebel können dann im Fahrzeug vermieden werden, was sich kostensparend auswirkt. Die Erkennung von Aerosol in der Fahrzeugumgebung, insbesondere einem Nebel erfolgt dabei videobasiert. Die Bestimmung der Nebeldichte wird durch Auswertung von einem oder mehreren verschiedenen vorhandenen Nebel-Indikatoren ermittelt, die aus den Bildinformationen des Kamerabildes extrahiert werden.

Vorteilhaft ist, dass insbesondere die Stärke des gemessenen Aerosols oder Nebels durch einen einzigen Skalar als Aerosolintensitätswert quantifiziert werden kann.

Um einen solchen Aerosolintensitätswert zu bestimmen werden der

- Farbindikatorwert a, der insbesondere eine Unterdrückung der mittleren Rot-Pixel im Bereich einer Region-of-Interest repräsentiert (d.h. in einer Region des Bildes der Kamera, die; und

- der Gradientenindikatorwert b verwendet, der einen mittleren Gradienten im mittleren Nonanten des Bildes repräsentiert, wobei unter einem Nonanten des Bildes ein Neuntel-Ausschnitt des Bildes der Kamera zu verstehen ist, ähnlich einem Quadranten, der ein Viertel von einem ganzen bezeichnet.

Durch eine Linearkombination dieser Indikatorwerte kann der (beispielsweise skalare) Aerosolintensitätswert c als ein weiterer Indikator berechnet, der die Intensität des detektierten Nebels quantifiziert.

Hat nun Farbindikatorwert a einen Wert aus dem Wertebereich $a_1$ bis $a_2$, so lässt er sich durch die Anwendung einer Umformungsformel

$$\frac{a - a_1}{a_2 - a_1}$$

auf den Wertebereich zwischen 0 und 1 abbilden bzw. normieren. Entsprechend kann der Gradientenindikatorwert b, der beispielsweise ebenfalls Werte aus dem Wertebereich $b_1$ bis $b_2$ annimmt, durch die Anwendung der Umformungsformel

$$\frac{b - b_1}{b_2 - b_1}$$

auf den Wertebereich zwischen 0 und 1 abbilden bzw. normieren. Auf diese Weise wird eine Verknüpfung von unterschiedlichen Werten (mit unterschiedlichen physikalischen Einheiten) einfach möglich. Weiterhin kann durch die Normierung der Indikatorwerte bei bekannten Grenzwerten, auch ein Aerosolintensitätswert erhalten werden, der in einem Wertebereich zwischen 0 und 1 liegt, so dass der Aerosolintensitätswert auch sehr einfach eine Abschätzung ermöglicht, wie hoch die relative Aerosolkonzentration im Sichtfeld der Kamera des Fahrzeugs ist.

Der Zusammenhang zwischen dem Farbindikatorwert a und dem Gradientenindikatorwert b zur Bestimmung des Aerosolintensitätswertes c lässt sich dabei wie folgt formelhaft ausdrücken:

$$c = \gamma * \frac{a - a_1}{a_2 - a_1} * (1 - \gamma)\frac{b - b_1}{b_2 - b_1}$$

wobei durch den Parameter $\gamma = [0 \ldots 1]$ eine Gewichtung der Indikatoren zur Feineinstellung bzw. Feinabstimmung der Aerosolintensitätserkennung eingestellt werden kann.

Der so berechnete Nebeldichteindikator bzw. Aerosolintensitätswert c mit dem Wertebereich zwischen 0 und 1 ist somit ein Maß für die Stärke oder Intensität des detektierten Nebels.

Bei Indikatoren, wie dem Farbindikatorwert oder dem Gradientenindikatorwert, bei denen eine Abnahme des Absolutwerts mit einer höheren Nebeldichte korreliert, sollte entsprechend das Vorzeichen negiert werden.

Der so berechnete Nebeldichteindikator c mit dem Wertebereich zwischen 0 und 1 wird dann beispielsweise mit einem Schwellwert verglichen, wodurch eine Entscheidung über die Intensität oder die Stärke des Nebels getroffen werden kann, um z.B. das Fernlicht abzublenden, damit der Fahrer nicht geblendet wird.

Die Bestimmung oder Erkennung der Intensität des Aerosols bzw. Nebels in der Fahrzeugumgebung kann für unterschiedliche Fahrerassistenzanwendungen eingesetzt werden. Beispielsweise können in einer Anwendung des vorstehend beschriebenen Ansatzes im Fernlichtassistenten des Fahrzeugs (auch als HMA bezeichnet; HMA = High Beam Assist = Fernlichtassistent), falls Nebel erkannt wird, die Scheinwerfer des Fahrzeugs automatisch ins Abblendlicht geschaltet werden schalten, um eine Blendung des Fahrer auf Grund der Reflektion von Licht der Scheinwerfer des Fahrzeugs zu vermeiden. Um ein zyklisches Auf- und Abblenden zu umgehen, soll nun nach Wegnahme der Nebelindikation noch eine gewisse Zeit gewartet werden, bevor ins Fernlicht geschaltet wird. Diese Zeit kann nun abhängig von der zuvor detektierten Nebelintensität gewählt werden. D.h. wenn es sich um starken Nebel gehandelt hat, so wird eine längere Zeit gewartet, als bei schwächerem Nebel. Des Weiteren kann neben der Aerosol- oder Nebelintensität auch die Dauer, während der das Aerosol oder der Nebel erkannt wird, als Parameter für eine Verlängerung der Wartezeit vor einem Umschalten von Abblendlicht in Fernlicht dienen.

Fig. 4 zeigt ein Ablaufdiagramm eines weiteren Ausführungsbeispiels zur Anwendung des erfindungsgemäßen Verfahrens, wobei das Ablaufdiagramm ein Ansteuern eines Veränderns der Lichtaussendung durch die Scheinwerfer des Fahrzeugs umfasst. Zunächst wird ein einem Schritt 410 Nebel als ein Aerosol wird erkannt. In einem nachfolgenden Schritt 420 wird das Abblendlicht eingeschaltet, um dem Fahrer eine Verbesserung der Sicht auf die Fahrbahn zu ermöglichen. In einem weiteren, anschließenden Schritt 430 wird basierend auf der erkannten Intensität des Aerosols oder Nebels und /oder auf Grund der Zeit während der das Aerosol oder der Nebel erkannt wird, ein Lichtausstrahlungsparameter bestimmt, wie beispielsweise eine Entprellzeit t_fog, die nach einer Änderung der erkannten Intensität des Aerosols abgewartet werden soll, bevor die Scheinwerfersteuerungseinheit einen Beleuchtungszustand wechselt, beispielsweise von Fern- auf Abblendlicht oder von Abblendlicht auf Fernlicht umschaltet. Auf diese Weise kann ein vom Fahrer als zu schnelles Wechselns des Beleuchtungs- oder Ausleuchtungszustandes vermieden werden, das ihn möglicherweise irritiert und somit gefährliche Fahrsituationen hervorruft. Wird somit ein einem nachfolgenden Schritt 440 Nebel oder das Aerosol wird nicht mehr erkannt, wird in einem hierauf folgenden Schritt 450 die angegebene Entprellzeit abgewartet und in einem wiederum anschließenden Schritt 460 wieder auf Fernlicht umgeschaltet.

Gemäß einer anderen Anwendung kann die vorliegende Erfindung auch bei einer adaptiven Fernlichtkontrolle AHC (AHC = Adaptive High Beam Control = adaptive Fernlichtkontrolle) als Fahrerassistenzsystem eingesetzt werden. Ähnlich wie bei der Steuerung der Fern- und Abblendlicht wird bei der AHC-Assistenzfunktion kontinuierlich zwischen Abblendlicht und Fernlicht gewechselt. Dabei können auch Lichtstufen beispielsweise zwischen Abblend- und Fernlicht angefahren oder ausgewählt werden, die abhängig von der Nebel- oder Aerosolintensität so gewählt werden, dass eine für den Fahrer optimale Ausleuchtung entsteht. Von Vorteil ist es, bei einer hohen Nebelintensität eine niedrige Lichtverteilung oder Ausleuchtung des Bereichs vor dem Fahrzeug zu wählen, damit die resultierende Blendung gering ist, jedoch es immer noch eine gute Ausleuchtung existiert. Gleichsam sollte bei einer niedrigen Nebelintensität der Scheinwerfer einen möglichst großen Öffnungswinkel aufweisen, jedoch nicht ins Fernlicht fahren, da dies zu Blendungen geführt hat.

Die beschriebenen und in den Figuren gezeigten Ausführungsbeispiele sind nur beispielhaft gewählt.

Umfasst ein Ausführungsbeispiel eine "und/oder" Verknüpfung zwischen einem ersten Merkmal und einem zweiten Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (400) zur Steuerung einer Scheinwerferanlage (145, 150) eines Fahrzeugs (100) mit folgenden Schritten:

- Einlesen (340) von Bildinformationen eines Bildes (125) einer Kamera (110);
- Bereitstellen (350) eines Farbindikatorwertes (290) für zumindest einen Teilausschnitt (230) des Bildes (125) der Kamera (110), wobei der Farbindikatorwert (290) ein Verhältnis zwischen einem ersten Parameter (250) und einem zweiten Parameter (270) repräsentiert, wobei der erste Parameter (250) einen Wert repräsentiert, der unter Anwendung eines ersten Farbfilters auf die Bildinformationen in dem Teilausschnitt (240) erhalten wird und der zweite Parameter (270) einen Wert repräsentiert, der unter keiner Anwendung eines Farbfilters oder der Anwendung eines vom ersten Farbfilter unterschiedlichen zweiten Farbfilters auf die Bildinformationen in dem Teilausschnitt (230) erhalten wird und wobei im Schritt des Bereitstellens ein Gradientenindikatorwert (310) bereitgestellt wird, der einen aus den Bildinformationen entnehmbaren Helligkeitsunterschied von unterschiedlichen, insbesondere benachbarten Bildbereichen des Bildes (125) der Kamera (110) repräsentiert;

- Bestimmen (360) eines Aerosolintensitätswertes (297) unter Verwendung des Farbindikatorwertes (290), um eine Intensität des Aerosols in dem Sichtfeld (120) der Kamera (110) des Fahrzeugs (100) als Aerosolsignal (140, 297) zu bestimmen und bereitzustellen, wobei die Intensität eines Aerosols eine Menge von Tropfen oder Partikeln repräsentiert, die im Sichtfeld der Kamera (110) des Fahrzeugs (100) vorhanden zu sein scheint und wobei im Schritt des Bestimmens der Aerosolintensitätswert (297) unter Verwendung des Farbindikatorwertes (290) und unter Verwendung des Gradientenindikatorwertes (310) bestimmt wird;

- Einlesen (410) des Aerosolsignals (140, 297), das eine erkannte Intensität des Aerosols (130) in einem Sichtfeld (120) der Kamera (110) des Fahrzeugs (100) repräsentiert; und

- Ansteuern (420 - 460) eines Veränderns einer Lichtausstrahlung (155) in einem Beleuchtungsbereich vor dem Fahrzeug (100) durch die Scheinwerferanlage (145, 150), ansprechend auf das Aerosolsignal (140);

**dadurch gekennzeichnet, dass**
im Schritt des Bestimmens (360) vor dem Bestimmen des Aerosolintensitätswertes (297) der Farbindikatorwert (290) in einem Bereich zwischen Farbindikatorgrenzwerten normiert wird und der Gradientenindikatorwert in einem Bereich zwischen Gradientenindikatorgrenzwerte normiert wird und dass ferner ein Schritt des Erkennens des Vorhandenseins einer für den Straßenverkehr kritischen Intensität des Aerosols (130) in dem Sichtfeld (120) der Kamera (110) des Fahrzeugs (100) vorgesehen ist, wenn der Aerosolintensitätswert (297) in einer vorbestimmten Beziehung zu einem Schwellwert steht.

2. Verfahren (400) gemäß Anspruch 1, **dadurch gekennzeichnet, dass** im Schritt des Ansteuerns (420 - 450) eine Veränderung eines Lichtausstrahlungsparameters abhängig von der Zeit des Vorhandenseins des Aerosols (130), insbesondere des Vorhandenseins einer vorbestimmten Mindestintensität des Aerosols (130) bestimmt oder angesteuert wird.

3. Verfahren (400) gemäß einem der vorangegangenen Ansprüche, **dadurch gekennzeichnet, dass** im Schritt des Ansteuerns (420 - 450) eine Veränderung einer Lichtverteilung bei einer aktivierten Lichtausstrahlungskontrolle in Abhängigkeit von der erkannten Intensität des Aerosols angesteuert wird.

4. Verfahren (400) gemäß einem der vorangegangenen Ansprüche, **dadurch gekennzeichnet, dass** im Schritt des Ansteuerns (420 - 450) eine Veränderung eines Lichtausstrahlungsparameters für eine Lichtausgabe durch die Scheinwerferanlage (145, 150) des Fahrzeugs (100) zwischen unterschiedlichen Beleuchtungszuständen angesteuert wird.

5. Verfahren (330) gemäß einem der vorangegangenen Ansprüche, **dadurch gekennzeichnet, dass** im Schritt des Bestimmens (360) der Aerosolintensitätswert (297) durch eine Linearkombination, insbesondere durch eine gewichtete Linearkombination aus dem Farbindikatorwert (290) und dem Gradientenindikatorwert (310) bestimmt wird.

6. Verfahren (330) gemäß einem der vorangegangenen Ansprüche, **dadurch gekennzeichnet, dass** im Schritt des Bereitstellens (350) ein Farbindikatorwert (290) bereitgestellt wird, bei dem der erste oder zweite Farbfilter ein Farbfilter ist, welches Rot-Anteile in den Bildinformationen herausfiltert.

7. Verfahren (330) gemäß einem der vorangegangenen Ansprüche, **dadurch gekennzeichnet, dass** im Schritt des Bestimmens (360) ein Aerosolindikatorwert (297) bestimmt wird, der durch einen Skalar repräsentiert ist.

8. Verfahren (330) gemäß einem der vorangegangenen Ansprüche, **dadurch gekennzeichnet, dass** im Schritt des Bestimmens der Gradientenindikatorwert (310) unter Verwendung von Bildinformationen aus einem mittigen Bereich des Bildes (125) der Kamera (110) bestimmt wird, insbesondere wobei der Gradientenindikatorwert (310) unter Verwendung von Bildinformationen bestimmt wird, die einem Bildsegment des Bildes entstammen, der bei einer Einteilung des Bildes (125) der Kamera (110) in neun sich nicht überlappende Bildsegmente von acht dieser Teilausschnitte umgeben ist.

9. Vorrichtung (135, 145) zur Steuerung einer Scheinwerferanlage (145, 150) eines Fahrzeugs (100), wobei die Vorrichtung (135, 145) die folgenden Merkmale aufweist:

- eine Schnittstelle zum Einlesen von Bildinformationen eines Bildes (125) einer Kamera (110);

- eine Einheit zum Bereitstellen eines Farbindikatorwertes (290) für zumindest einen Teilausschnitt (230) des Bildes (125) der Kamera (110), wobei der Farbindikatorwert (290) ein Verhältnis zwischen einem ersten Parameter (250) und einem zweiten Parameter (270) repräsentiert, wobei der erste Parameter (250) einen Wert repräsentiert, der unter Anwendung eines ersten Farbfilters auf die Bildinformationen in dem Teilausschnitt (240) erhalten wird und der zweite Parameter (270) einen Wert repräsentiert, der unter keiner Anwendung eines Farbfilters oder der Anwendung eines vom ersten Farbfilter unterschiedlichen zweiten Farbfilters auf die Bildinformationen in dem Teilausschnitt (230) erhalten wird, und wobei in der Einheit zum Bereitstellen ein Gradientenindikatorwert (310) bereitgestellt wird, der einen aus den Bildinformationen entnehmbaren Helligkeitsunterschied von unterschiedlichen, insbesondere benachbarten Bildbereichen des Bildes (125) der Kamera (110) repräsentiert;

- eine Einheit zum Bestimmen (360) eines Aerosolintensitätswertes (297) unter Verwendung des Farbindikatorwertes (290), um eine Intensität des Aerosols in dem Sichtfeld (120) der Kamera (110) des Fahrzeugs (100) als Aerosolsignal (140, 297) zu bestimmen und bereitzustellen, wobei die Intensität eines Aerosols eine Menge von Tropfen oder Partikeln repräsentiert, die im Sichtfeld der Kamera (110) des Fahrzeugs (100) vorhanden zu sein scheint und wobei in der Einheit zum Bestimmen der Aerosolintensitätswert (297) unter Verwendung des Farbindikatorwertes (290) und unter Verwendung des Gradientenindikatorwertes (310) bestimmt wird;

- eine Schnittstelle zum Einlesen des Aerosolsignals (140, 297), das die erkannte Intensität eines Aerosols (130) in einem Sichtfeld (120) der Kamera (110) des Fahrzeugs (100) repräsentiert; und

- eine Einheit (145) zum Ansteuern eines Veränderns einer Lichtausstrahlung (155) in einem Beleuchtungsbereich vordem Fahrzeug (100) durch die Scheinwerferanlage (145, 150), ansprechend auf das Aerosolsignal (140)

**dadurch gekennzeichnet, dass**

in der Einheit zum Bestimmen vor dem Bestimmen des Aerosolintensitätswertes (297) der Farbindikatorwert (290) in einem Bereich zwischen Farbindikatorgrenzwerten normiert wird und der Gradientenindikatorwert in einem Bereich zwischen Gradientenindikatorgrenzwerte normiert wird und dass

ferner eine Einheit zum Erkennens des Vorhandenseins einer für den Straßenverkehr kritischen Intensität des Aerosols (130) in dem Sichtfeld (120) der Kamera (110) des Fahrzeugs (100) vorgesehen ist, wenn der Aerosolintensitätswert (297) in einer vorbestimmten Beziehung zu einem Schwellwert steht.

**10.** Computer-Programmprodukt mit Programmcode zur Durchführung des Verfahrens (330, 400) nach einem der Ansprüche 1 bis 8, wenn das Programm auf einer Vorrichtung (135) oder einem Signalverarbeitungssystem ausgeführt wird.

**Claims**

**1.** Method (400) for controlling a headlight system (145, 150) of a vehicle (100), having the following steps:

- reading in (340) image information of an image (125) from a camera (110);
- providing (350) a colour indicator value (290) for at least one partial detail (230) of the image (125) from the camera (110), wherein the colour indicator value (290) represents a ratio between a first parameter (250) and a second parameter (270), wherein the first parameter (250) represents a value obtained by applying a first colour filter to the image information in the partial detail (240) and the second parameter (270) represents a value obtained without applying a colour filter or by applying a second colour filter, which is different from the first colour filter, to the image information in the partial detail (230) and wherein the provision step entails a gradient indicator value (310) being provided that represents a brightness difference, extractable from the image information, for the different, in particular adjacent, image areas of the image (125) from the camera (110);
- determining (360) an aerosol intensity value (297) by using the colour indicator value (290) in order to determine and provide an intensity of the aerosol in the field of view (120) of the camera (110) of the vehicle (100) as an aerosol signal (140, 297), wherein the intensity of an aerosol represents a quantity of drops or particles that appears to be present in the field of view of the camera (110) of the vehicle (100) and wherein the determination step entails the aerosol intensity value (297) being determined by using the colour indicator value (290) and by using the gradient indicator value (310);
- reading in (410) the aerosol signal (140, 297) representing a detected intensity of the aerosol (130) in a field of view (120) of the camera (110) of the vehicle (100); and

- controlling (420 - 460) an alteration of an emission of light (155) in a lighting area in ; front of the vehicle (100) by the headlight system (145, 150), in response to the aerosol signal (140) ;

**characterized in that**
the determination step (360), before the determination of the aerosol intensity value (297), entails the colour indicator value (290) being normalized in an area between colour indicator limit values and the gradient indicator value being normalized in an area between gradient indicator limit values and **in that** further a step of detection of the presence of an intensity of the aerosol (130) critical for road traffic in the field of view (120) of the camera (110) of the vehicle (100) is provided if the aerosol intensity value (297) is in a predetermined relationship with a threshold value.

2. Method (400) according to Claim 1, **characterized in that** the control step (420 - 450) entails an alteration of a light emission parameter being determined or controlled on the basis of the time of the presence of the aerosol (130), in particular of the presence of a predetermined minimum intensity of the aerosol (130).

3. Method (400) according to either of the preceding claims, **characterized in that** the control step (420 - 450) entails an alteration of a distribution of light with a light emission check activated being controlled on the basis of the detected intensity of the aerosol.

4. Method (400) according to one of the preceding claims, **characterized in that** the control step (420 - 450) entails an alteration of a light emission parameter for an output of light by the headlight system (145, 150) of the vehicle (100) being controlled between different lighting states.

5. Method (330) according to one of the preceding claims, **characterized in that** the determination step (360) entails the aerosol intensity value (297) being determined by a linear combination, in particular by a weighted linear combination, of the colour indicator value (290) and the gradient indicator value (310).

6. Method (330) according to one of the preceding claims, **characterized in that** the provision step (350) entails a colour indicator value (290) being provided in which the first or second colour filter is a colour filter that filters out red components in the image information.

7. Method (330) according to one of the preceding claims, **characterized in that** the determination step (360) entails an aerosol indicator value (297) being determined that is represented by a scalar.

8. Method (330) according to one of the preceding claims, **characterized in that** the determination step entails the gradient indicator value (310) being determined by using image information from a central area of the image (125) from the camera (110), in particular wherein the gradient indicator value (310) is determined by using image information that comes from an image segment of the image that, when the image (125) from the camera (110) is divided into nine nonoverlapping image segments, is surrounded by eight of these partial details.

9. Apparatus (135, 145) for controlling a headlight system (145, 150) of a vehicle (100), wherein the apparatus (135, 145) has the following features;

     - an interface for reading in image information of an image (125) from a camera (110);
     - a unit for providing a colour indictor value (290) for at least one partial detail (230) of the image (125) from the camera (110), wherein the colour indicator value (290) represents a ratio between a first parameter (250) and a second parameter (270), wherein the first parameter (250) represents a value obtained by applying a first colour filter to the image information in the partial detail (240) and the second parameter (270) represents a value obtained without applying a colour filter or by applying a second colour filter, which is different from the first colour filter, to the image information in the partial detail (230), and wherein the provision unit is used to provide a gradient indicator value (310) that represents a brightness difference, extractable from the image information, for the different, in particular adjacent, image areas of the image (125) from the camera (110);
     - a unit for determining (360) an aerosol intensity value (297) by using the colour indicator value (290) in order to determine and provide an intensity of the aerosol in the field of view (120) of the camera (110) of the vehicle (100) as an aerosol signal (140, 297), wherein the intensity of an aerosol represents a quantity of drops or particles that appears to be present in the field of view of the camera (110) of the vehicle (100) and wherein the determination unit is used to determine the aerosol intensity value (297) by using the colour indicator value (290) and by using the gradient indicator value (310);
     - an interface for reading in the aerosol signal (140, 297) representing the detected intensity of an aerosol (130) in a field of view (120) of the camera (110) of the vehicle (100); and
     - a unit (145) for controlling an alteration of an emission of light (155) in a lighting area in front of the vehicle (100) by the headlight system (145, 150), in response to the aerosol signal (140),

**characterized in that**

the determination unit is used, before the determination of the aerosol intensity value (297), to normalize the colour indicator value (290) in an area between colour indictor limit values and to normalize the gradient indicator value in an area between gradient indicator limit values and **in that**

further a unit for detecting the presence of an intensity of the aerosol (130) critical for road traffic in the field of view (130) of the camera (110) of the vehicle (100) is provided if the aerosol intensity value (297) is in a predetermined relationship with a threshold value.

10. Computer program product having program code for performing the method (330, 400) according to one of Claims 1 to 8 when the program is executed on an apparatus (135) or on a signal processing system.

**Revendications**

1. Procédé (400), destiné à commander un dispositif de phares (145, 150) d'un véhicule (100), comportant les étapes suivantes :

> - lecture (340) d'informations d'image d'une image (125) d'une caméra (110) ;
> - mise à disposition (350) d'une valeur d'indicateur de couleur (290) pour au moins un extrait partiel (230) de l'image (125) de la caméra (110), la valeur d'indicateur de couleur (290) représentant un rapport entre un premier paramètre (250) et un deuxième paramètre (270), sachant que le premier paramètre (250) représente une valeur qui est obtenue en utilisant un premier filtre de couleurs sur les ' informations d'image dans l'extrait partiel (240) et le deuxième paramètre (270) représente une valeur qui est obtenue en n'utilisant pas de filtre de couleurs ou en utilisant un deuxième filtre de couleurs différent du premier filtre de couleurs sur les informations d'image dans l'extrait partiel (230) et dans l'étape de la mise à disposition, une valeur d'indicateur de gradient (310) étant mise à disposition, qui représente une différence de luminosité visible dans les informations d'image entre différentes zones d'image, notamment voisines de l'image (125) de la caméra (110) ;
> - détermination (360) d'une valeur d'intensité de l'aérosol (297) en utilisant la valeur d'indicateur de couleur (290), pour déterminer une intensité de l'aérosol dans le champ visuel (120) de la caméra (110) du véhicule (100) en tant que signal d'aérosol (140, 297) et la mettre à disposition, l'intensité d'un aérosol représentant une quantité de gouttes ou de particules qui semble être présente dans le champ visuel de la caméra (110) du véhicule (100) et étant déterminée dans l'étape de la détermination de la valeur d'intensité de l'aérosol (297) en utilisant la valeur d'indicateur de couleur (290) et en utilisant la valeur d'indicateur de gradient (310) ;
- lecture (410) du signal d'aérosol (140, 297) qui représente une intensité de l'aérosol (130) identifiée dans un champ visuel (120) de la caméra (110) du véhicule (100) ; et
- amorçage (420 à 460) d'une modification d'une émission lumineuse (155) par le dispositif de phares (145, 150), dans une zone d'éclairage à l'avant du véhicule (100), en réponse au signal d'aérosol (140) ;

**caractérisé en ce que**

dans l'étape de la détermination (360), avant la détermination de la valeur d'intensité de l'aérosol (297), la valeur d'indicateur de couleur (290) est normalisée dans un ordre compris entre des valeurs limites d'indicateur de couleur et la valeur d'indicateur de gradient est normalisée dans un ordre compris entre des valeurs limites d'indicateur de gradient et **en ce qu'**il est prévu par ailleurs une étape de l'identification de la présence d'une intensité de l'aérosol (130) critique pour le trafic routier dans le champ visuel (120) de la caméra (110) du véhicule (100) si la valeur d'intensité de l'aérosol (297) se trouve dans un rapport prédéfini par rapport à une valeur seuil.

2. Procédé (400) selon la revendication 1, **caractérisé en ce que** dans l'étape de l'amorçage (420 à 450), une modification d'un paramètre d'émission lumineuse est déterminée ou amorcée en fonction du temps de la présence de l'aérosol (130), notamment de la présence d'une intensité minimale prédéfinie de l'aérosol (130).

3. Procédé (400) selon l'une quelconque des revendications précédentes, **caractérisé en ce que** dans l'étape de l'amorçage (420 à 450), si le contrôle de l'émission lumineuse est activé, une modification d'une distribution lumineuse est amorcée en fonction de l'intensité de l'aérosol identifiée.

4. Procédé (400) selon l'une quelconque des revendications précédentes, **caractérisé en ce que** dans l'étape de l'amorçage (420 à 450), une modification d'un paramètre d'émission lumineuse pour une émission de lumière par le dispositif de phares (145, 150) du véhicule (100) entre différentes positions d'éclairage est amorcée.

5. Procédé (330) selon l'une quelconque des revendications précédentes, **caractérisé en ce que** dans l'étape de la détermination (360), la valeur d'intensité de l'aérosol (297) est déterminée par une association linéaire, notamment par une association linéaire pondérée à partir de la valeur d'indicateur de couleur (290) et de la valeur d'indicateur de gradient (310) .

6. Procédé (330) selon l'une quelconque des revendications précédentes, **caractérisé en ce que** dans l'étape de la mise à disposition (350), une valeur d'indicateur de couleur (290) est mise à disposition pour laquelle le premier ou le deuxième filtre de couleurs est un filtre de couleurs qui filtre des composantes rouges hors des informations d'image.

7. Procédé (330) selon l'une quelconque des revendications précédentes, **caractérisé en ce que** dans l'étape de la détermination (360), une valeur d'indicateur d'aérosol (297) est déterminée qui est représentée par un scalaire.

8. Procédé (330) selon l'une quelconque des revendications précédentes, **caractérisé en ce que** dans l'étape de la détermination de la valeur d'indicateur de gradient (310) en utilisant des informations d'image, la détermination s'effectue à partir d'une zone centrale de l'image (125) de la caméra (110), sachant notamment que la valeur d'indicateur de gradient (310) est déterminée en utilisant des informations d'image qui proviennent d'un segment d'image de l'image, qui lors d'une division de l'image (125) de la caméra (110) en neuf segments d'image qui ne se chevauchent pas est entouré par huit de ces extraits partiels.

9. Dispositif (135, 145), destiné à commander un dispositif de phares (145, 150) d'un véhicule (100), le dispositif (135, 145) présentant les caractéristiques suivantes :

   - une interface, pour la lecture d'informations d'image d'une image (125) d'une caméra (110) ;
   - une unité, pour la mise à disposition d'une valeur d'indicateur de couleur (290) pour au moins un extrait partiel (230) de l'image (125) de la caméra (110), sachant que la valeur d'indicateur de couleur (290) représente un rapport entre un premier paramètre (250) et un deuxième paramètre (270), le premier paramètre (250) représentant une valeur qui est obtenue en utilisant un premier filtre de couleurs sur les informations d'image dans l'extrait partiel (240) et le deuxième paramètre (270) représentant une valeur qui est obtenue en n'utilisant aucun filtre de couleurs ou en utilisant un deuxième filtre de couleurs différent du premier filtre de couleurs sur les informations d'image dans l'extrait partiel (230), et dans l'unité de mise à disposition, une valeur d'indicateur de gradient (310) étant mise à disposition qui représente une différence de luminosité visible dans les informations d'image de différentes zones d'image, notamment voisines de l'image (125) de la caméra (110) ;
   - une unité, pour la détermination (360) d'une valeur d'intensité de l'aérosol (297) en utilisant la valeur d'indicateur de couleur (290), pour mettre à disposition une intensité de l'aérosol dans le champ visuel (120) de la caméra (110) du véhicule (100) en tant que signal d'aérosol (140, 297) et la mettre à disposition, l'intensité d'un aérosol représentant une quantité de gouttes ou de particules qui semble être présente dans le champ visuel de la caméra (110) du véhicule (100) et étant déterminée dans l'unité de i détermination de la valeur d'intensité de l'aérosol (297) en utilisant la valeur d'indicateur de couleur (290) et en utilisant la valeur d'indicateur de gradient (310) ;
   - une interface pour la lecture du signal d'aérosol (140, 297) qui représente l'intensité identifiée d'un aérosol (130) dans un champ visuel (120) de la caméra (110) du véhicule (100) ; et
   - une unité (145) pour amorcer une modification d'une émission lumineuse (155) dans une zone d'éclairage à l'avant du véhicule (100) par le dispositif de phares (145, 150), en réponse au signal d'aérosol (140)

**caractérisé en ce que**

dans l'unité de détermination, avant la détermination de la valeur d'intensité de l'aérosol (297), la valeur d'indicateur de couleur (290) est normalisée dans un ordre compris entre des valeurs limites d'indicateur de couleur et la valeur d'indicateur de gradient est normalisée dans un ordre compris entre des valeurs limites d'indicateur de gradient et **en ce qu'**il est prévu par ailleurs une unité pour l'identification de la présence d'une intensité de l'aérosol (130) critique pour le trafic routier dans le champ visuel (120) de la caméra (110) du véhicule (100), si la valeur d'intensité de l'aérosol (297) se trouve dans un rapport prédéfini par rapport à une valeur seuil.

10. Produit de programme informatique avec un code programme, pour la réalisation du procédé (330, 400) selon l'une quelconque des revendications 1 à 8, si le programme est exécuté sur un dispositif (135) ou un système de traitement de signaux.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6320176 B1
- US 20100157614 A1